# EUROPEAN PATENT SPECIFICATION

(11) **EP 2 485 514 B1**
(45) Date of publication and mention of the grant of the patent: **18.12.2013**
(21) Application number: 12159399.0
(22) Date of filing: 28.02.2007
(51) Int. Cl.: H04W 16/00, H04J 11/00

(54) **Self configuring and optimisation of cell neighbours in wireless telecommunications networks**
Selbstkonfiguration und Optimierung von Zellennachbarn in drahtlosen Telekommunikationsnetzwerken
Configuration automatique et optimisation de cellules voisines dans des réseaux de télécommunications sans fil

(43) Date of publication of application: 08.08.2012
(62) Divisional of application: 07711716.6
(73) Proprietor: Unwired Planet, LLC, Reno, NV 89501 (US)
(72) Inventor: Moe, Johan, SE-590 17 MANTORP (SE); Kallin, Harald, SE-192 53 SOLLENTUNA (SE)
(74) Representative: McCann, Heather Alison

(56) References cited:
- EP-A- 1 720 373
- WO-A-96/38014
- WO-A-2005/032190

## Description

The present invention relates to self configuring and optimisation of cell neighbours in wireless telecommunications networks.

### BACKGROUND OF THE INVENTION

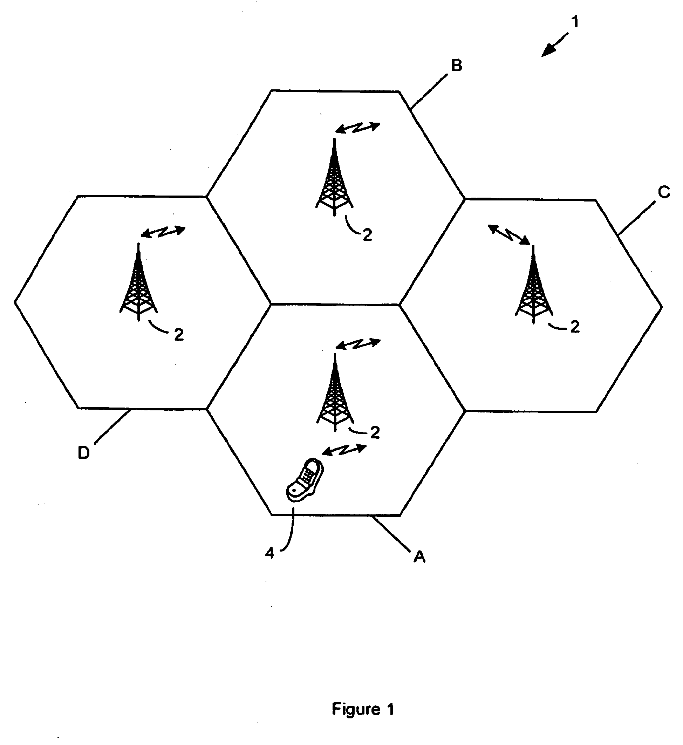

Figure 1 of the accompanying drawings illustrates a wireless telecommunications network, which defines a number of communication cells (A, B, C, D) each of which is served by a radio base station 2. Each communication cell covers a geographical area, and by combining a number of cells a wide area can be covered. A mobile terminal 4 is illustrated communicating in cell A, and is able to move around the system 1.

A base station 2 contains a number of receivers and transmitters to give radio coverage for one or more cells. Each base station 2 is connected to network "backbone", or core network infrastructure (not shown), which enables communications between base stations and other networks. The example system of Figure 1 shows one base station per cell.

An important concept in such a network is the cell and its neighbours. During a call a mobile terminal 4 typically moves around among the cells; moving from one cell to one of its neighbours, repeatedly. A list of the known neighbours, the so called "neighbour cell set", is important both for the network 1 and for the mobile terminal 4 to enable reliable handover between cells. The network 1 can store information relating to a neighbour set for each mobile terminal. The neighbour set is used for evaluation and handover of a mobile terminal from one cell to another as the mobile terminal crosses a cell boundary. It will be readily appreciated that the cell boundaries are not sharply defined, but will in practice be somewhat blurred as the range of the base stations will overlap with one another.

In existing systems, the mobile terminal 4 detect and measure cell operating parameters for neighbouring cells by receiving signals from the neigbourhood. The measured operating parameters are typically a physical layer identifier such as a scramble code which is non uniquely assigned to the cell, signal strength, signal quality and timing information. The mobile terminal measures the operating parameters of each neighbour cell and reports those back to the network 1. When the quality of a neighbour cell is considered better than the current serving cell, a handover from the serving cell to the chosen neighbour cell is executed by the network. The neighbour cell then becomes the serving cell for the mobile terminal.

Typically in a WCDMA (wideband code division multiple access) system, the mobile terminal detects Common Pilot Channel (CPICH) transmissions from surrounding cells, in order to determine id (scamble code) and timing information.

When the mobile reports the neighbour cell signal quality measurements to the network, the cells' respective identities become important. Currently, cell identities (scramble code) are reused for more than one cell. The reuse of identities means that cells may be confused with one other, since the serving cell may have neighbour cells having the same identity information.

Document WO96/38014 is an example were cell identification codes that are non-unique are broadcast in the cells and serves to identify the cell for example when neighbour cell measurements are performed by a mobile terminal. Despite the fact that WO96/38014 states that the cell identity is unique per cell, it can be understood that the cell identity is non-unique. The name of the cell identity used in WO96/38014 is BSIC (Base Station Identity Code) and that is standardized for the GSM system. The system disclosed in WO96/38014 seems to correspond to the GSM. According to the GSM standard the BSIC is composed of a 3-bit Network Color Code (NCC) and a 3-bit Base station Color Code (BCC), and with a total of 6 binary bits 64 unique codes can be produced. Since a cellular network comprises many more cells that 64 it is understood that the BSIC codes must be reduced. GSM is a TDMA system and neighboring cells are assigned different sets of frequency channels. A GSM terminal is instructed on which channels it shall make neighbor cell measurements and this reduces the risk that a measurement that is reported with its BSIC is mistaken to be made on another cell than what is actually measured. It is important to make correct identification of cells reported by the mobile terminals, otherwise a handover may be initiated to another cell than the best suited.

Since the cells' physical layer identifiers are non-unique, populating and maintaining the neighbour cell sets can never be fully automatic. Human efforts are needed to resolve conflicts where the serving cell has multiple neighbours using the same non-unique identifier. It is cumbersome to plan the network such that a cell measured and reported by a mobile terminal can not be mistaken to be another cell.

### SUMMARY OF THE PRESENT INVENTION

The present invention is defined in the appended claims.

The present invention aims to reduce the cost of planning and maintaining neighbour cell sets. Embodiments of the present invention are based on an extra step that is made where mobile terminals are required to make an additional effort to identify uniquely neighbouring cells in the radio network and that the identities are reported from the mobile terminal to the network. Embodiments of the present invention are intended to reduce manual intervention. The method can be implemented as part of an operation support system and base station or only in the RBS. The method is valid for wireless telecommunications technologies such as GSM, WCDMA and LTE.

One embodiment relates to a method for a mobile terminal, and that comprises, the mobile terminal communicating with a radio base station which serves a first communications cell. The mobile terminal further receives a request from the radio base station to retrieve a unique cell identity of a second communications cells, retrieves the unique cell identity of the second communications cells and reports it to the radio base station of the first communications cell.

Another embodiment relates to a mobile terminal for use in a wireless telecommunications system which comprises a plurality of communications cells. A non-unique and a unique cell identity are transmitted in the cells. The terminal comprises a controller for communication with a radio base station which serves a first communications cell. The controller in response to a receipt of an instruction from the radio base station that is operable to: detect unique cells identities for a second communications cells, and report the unique cell identities of the second cell to the radio base station of the first communications cell.

Yet another embodiment relates to a method for self configuring of cell neighbours in a wireless telecommunications system which comprises a plurality of communications cells, and in which cells are transmitted a non·unique cell identity and a unique cell identity. The method comprising,
- Requesting the mobile terminal to retrieve the unique cell identity of a second cell
- Receiving the unique cell identity of the second communications cell from the mobile terminal
- Establishing a transport connection by finding in a lookup map a mapping of the unique cell identity of the second cell with a network address of the radio base station that serves the second cell.

A further embodiment relates to a wireless communications network that defines a plurality of of communications cells and in which cells are transmitted a non-unique cell identity and a unique cell identity. The network comprising network resources that are operable to:
- Communicate with a mobile terminal operable in a first communications cell;
- Receive from the mobile terminal a unique cell identity of a second communications cell;
- Establish a transport connection by finding in a lookup map a mapping of the unique cell identity of the second cell with a network address of the radio base station that serves the second cell.

### BRIEF DESCRIPTION OF THE DRAWINGS

Figure 1 illustrates a cellular wireless telecommunications network;
Figure 2 illustrates a mobile terminal and a base station; and
Figure 3 to 6 illustrate steps in a method embodying one aspect of the present invention.

### DETAILED DESCRIPTION OF THE PREFERRED EMBODIMENTS

In order to address the shortcomings of prior solutions, the present invention provides a method and architecture for maintaining neighbour cell sets within a mobile cellular network.

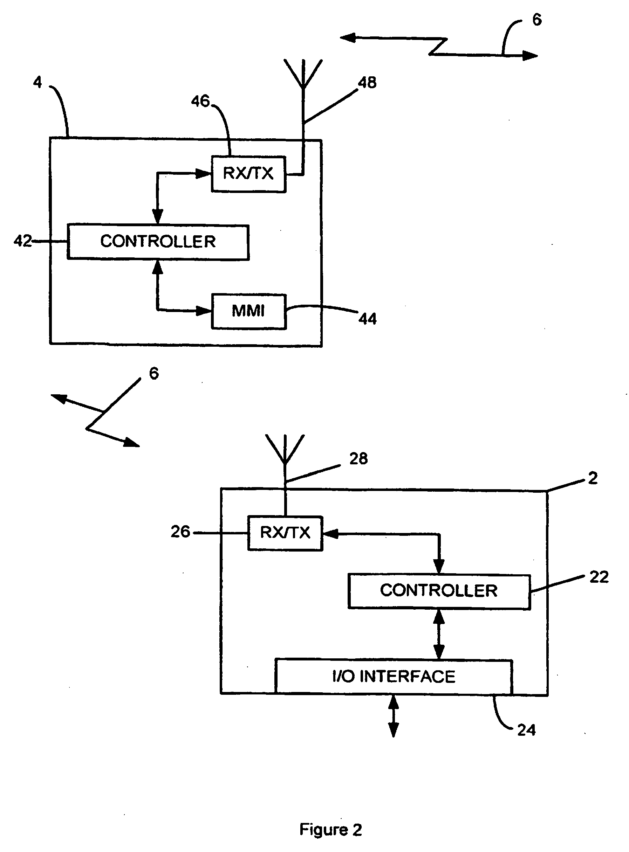

Figure 2 is a schematic diagram showing a mobile terminal 4 and a base station 2 which communicate via an air interface 6. The base station 2 includes a controller 22, input/output (I/O) interface 24, a radio transceiver 26 and an antenna 28. The controller communicates with mobile terminals via the transceiver 26 and antenna 28 over the air interface 6. The controller 22 also communicates with the rest of the telecommunications network via the I/O interface 24.

The mobile terminal 4 comprises a controller 42, a man machine interface (MMI) 44, a radio transceiver 46, and an antenna 48. The controller of the mobile terminal 4 serves to control communications with the base station 2 via the transceiver 46 and antenna 48, over the air interface 6. Interactions with the user of the device take place using the man machine interface 44, which can include a key pad, microphone, loudspeaker and display device, for example. The mobile terminal may also be communication equipment with only a machine-machine interface. These aspects of the base station and mobile terminal are designed to operate in accordance with usual practice.

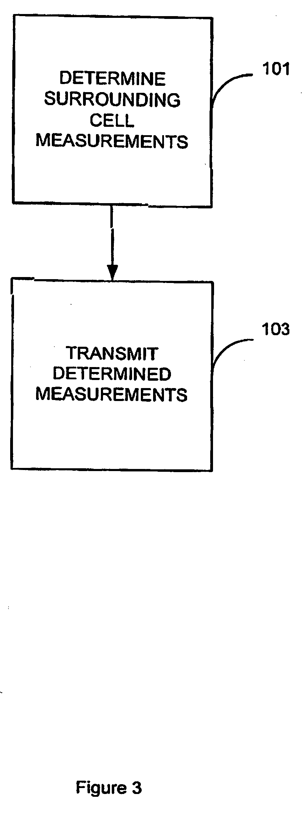

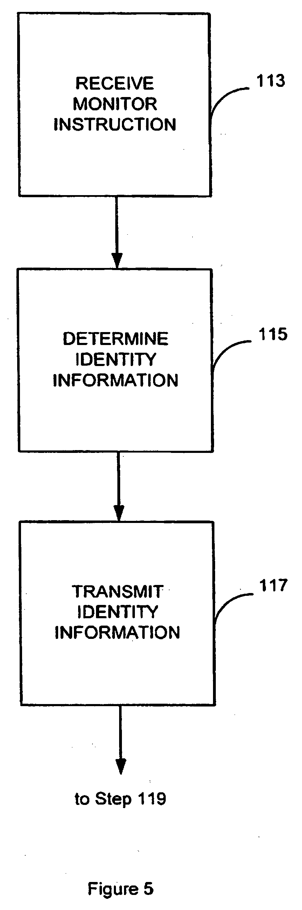

However, base stations 2 and mobile terminals 4 which operate in accordance with the present invention are adapted to carry out the method of the invention as described below with reference to Figures 3 to 6. It will be appreciated that the various functional units can be provided by the controller, or by other specific units in the devices, or network 1.

A method embodying the present invention will now be described with reference to the flowcharts of Figures 3 to 6 as well as Figure 2. Figure 3 illustrates steps to be carried out by the mobile terminal 4. The first step of the method is step 101 in which the mobile terminal 4 determines parameter measurements for surrounding cells. Next, the mobile terminal reports the measurement information to the base station (step 103).

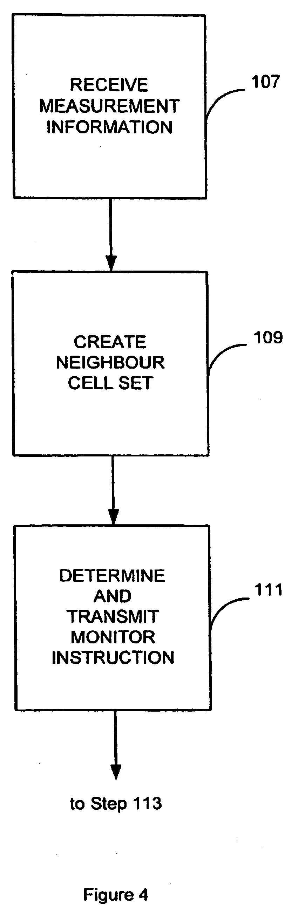

Turning to Figure 4, the base station 2 receives the measurement information from the mobile terminal 4 (step 107), with each measurement information tied to the (non-unique) cell identities that the mobile terminal 4 have detected. If the information from the mobile terminal 4 contains measurements from a cell identity that previously is not a member of the neighbouring cell set, the mobile terminal 4 may be requested to also retrieve the unique cell identity (step 113). The unique cell identity is transmitted from base stations at a much less frequent interval than the physical layer identity. In order to receive and decode this information, the mobile terminal 4 may have to momentarily interrupt its communication with the serving cell. When the unique cell identity has been retrieved (step 115), this information is transmitted to the serving cell (step 117). When the serving cell receives the unique cell identity (step 119) it may now add the newly discovered neighbour cell to its neighbour cell set (step 121) and establish a transport connection to it. It is obvious that the cellular network may want some filtering of the measurement data including several mobile terminals to identify the new neighbour, thereby avoiding adding a distant cell that was detected under exceptional propagation conditions, for example from a mobile terminal 4 located in an aircraft.

The mobile terminal 4, in another example, may provide the unique identity information to the base station 2, without the need to receive an instruction to do so from the base station 2.

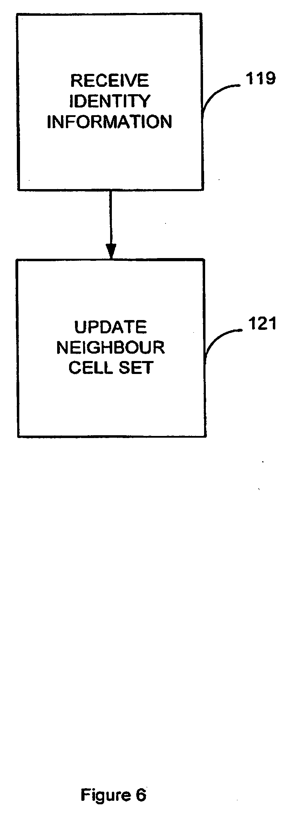

Turning to Figure 6, the base station 2 receives the unique identity information (step 119), and then updates the neighbour cell set. In this way, the neighbour cell set includes unique identity information for those cells which are to be considered as neighbour cells which are candidate cells for handover of the mobile terminal 4.

Making use of unique cell identifiers (UCID) means that there is unambiguous information relating to the identity of the neighbour cells, and so confusion regarding those neighbouring cells is removed. Using the fast and low-resource demanding non-unique cell identity for most of the measurements, facilitates efficient resource usage within mobile terminals 4 and rapid handover to the neighbour cells. The mobile terminal 4 is only requested to retrieve the more cumbersome unique cell identifier when a new neighbour is detected, or when an audit of the relation between the non-unique and unique cell identity seems appropriate.

All cell relations can be continuously evaluated. Inputs to that evaluation are mobile terminal reports and events, network events and operator input. The result of the evaluation is that the cell (or cell relations) will retain different properties. This can also be seen as the cell (relation) being in different states.

The major advantage of embodiments of the present invention is that it removes the need for manual involvement within the process of maintaining neighbour sets. The operator can decide to fully neglect the concept of neighbours and let the system take care of the neighbour cell definitions.

Cell lookup maps the unique cell identity (UCID) to the address of the realising node of that cell. For example, in LTE, this can be an ordinary DNS, mapping the cell identity to an IP address. The IP address in turn points to the RBS realising the cell.

## Claims

1. A method for operating a mobile terminal in a wireless telecommunications system which defines a plurality of communications cells in which a non-unique cell identity and a unique cell identity are transmitted, the method comprising:
communicating with a radio base station which serves a first communications cell;
receiving (113) a request from the radio base station to retrieve the unique cell identity of a second communications cell among the plurality of communications cells;
retrieving (115) the unique cell identity of the second communications cell; and
reporting (117) the unique cell identity of the second communications cell to the radio base station of the first communications cell.

2. A method as claimed in claim 1, wherein the step of receiving a request is preceded by the steps of determining (101) the non-unique cell identity of the second communications cell and reporting (103) the non-unique cell identity of the second communications cell to the radio base station that serves the first communications cell.

3. A method as claimed in claim 2, wherein the non-unique cell identity of the second communications cell as being reported has tied to it at least one operating parameter of the second communications cell comprising one or more of a signal strength measurement, a signal quality measurement, and timing information.

4. A method as claimed in claim 1 or 2, wherein retrieving and reporting the unique cell identity is performed in response to receiving the request from the radio base station of the first communications cell

5. A method as claimed in any one of the preceding claims, wherein the second communications cell neighbours the first communications cell.

6. A mobile terminal (4) for use in a wireless telecommunications system which comprises a plurality of communications cells in which a non-unique cell identity and a unique cell identity are transmitted, the terminal comprising a controller (42) for communicating with a radio base station which serves a first communications cell, wherein the controller in response to a receipt of an instruction from the radio base station of the first communications cell is operable to:
detect (115) unique cell identity information for a second communications cell; and
report (117) the unique cell identity information for the second communications cell to the radio base station of the first communications cell.

7. A mobile terminal as claimed in claim 6, that is operable to retrieve (101) the non-unique cell identity of the second communications cell and to report the non-unique cell identity of the second communications cell to the base station that serves the first communications cell.

8. A mobile terminal as claimed in claim 7, and that is operable to retrieve and report the non-unique cell identity of the second communications cell in connection to being operable to detect and report at least one operating parameter of the second communications cell comprising one or more of a signal strength measurement, a signal quality measurement, and timing information.

9. A mobile terminal as claimed in any one of claims 6 to 8, wherein the second communications cell neighbours the first communications cell.

10. A mobile terminal as claimed in any one of claims 6 to 9, wherein the controller is operable to detect unique cell identities for a plurality of further communications cells, and to report the unique cell identities as detected to the radio base station of the first communications cell.

11. A method for self configuring of cell neighbours in a wireless telecommunications system which comprises a plurality of communications cells in which a non-unique cell identity and a unique cell identity are transmitted, the method comprising:
communicating with a mobile terminal operating in a first communications requesting (111) the mobile terminal to retrieve the unique cell identity of a second communications cell;
receiving (119) the unique cell identity of the second communications cell from the mobile terminal; and
establishing a transport connection by finding in a lookup map a mapping of the unique cell identity of the second communications cell with a network address of the radio base station that serves the second communications cell.

12. A method as claimed in claim 11, wherein the step of requesting the unique cell identity is preceded by the step of:
receiving (107) from the mobile terminal a non-unique cell identity of the second communications cell.

13. A method as claimed in claim 12, wherein the non-unique cell identity as received has tied to it at least one operating parameter of the second communications cell comprising one or more of a signal strength measurement, a signal quality measurement, and timing information.

14. A method as claimed in any one of claims 11 to 13, further comprising receiving unique cell identities for a plurality of further communications cells from the mobile terminal.

15. A method as claimed in any one of claims 11 to 14, wherein said network address is an IP address.

16. A method as claimed in any one of claims 11 to 15 as performed by a radio base station.

17. A wireless telecommunications network which defines a plurality of communications cells in which a non-unique cell identity and a unique cell identity are transmitted, the network comprising network resources operable to:
communicate with a mobile terminal operating in a first communications cell;
request (111) the mobile terminal to retrieve the unique cell identity of a second communications cell;
receive (119) from the mobile terminal a unique cell identity of the second communications cell;
establish a transport connection by finding in a lookup map a mapping of the unique cell identity of the second communications cell with a network address of the radio base station that serves the second communications cell.

18. A network as claimed in claim 17, wherein said network resources are further operable to:
receive (107) from the mobile terminal the non-unique cell identity of the second communications cell.

19. A network as claimed in claim 18, wherein said network resources are further operable to:
receive (107) said non-unique identity tied to at least one operating parameter of the second cell that comprises one or more of a scramble code, a signal strength measurement, a signal quality measurement, and timing information.

20. A network as claimed in any one of claims 17 to 19, wherein said network resources are operable to receive (119) unique cell identities for a plurality of further communications cells from the mobile terminal.

21. A network as claimed in any one of claims 17 to 20, wherein said network address is an IP address.

22. A network as claimed in any one of claim 17 to 21, wherein the network resources are provided by a radio base station (2).

## Patentansprüche

1. Verfahren zum Betreiben eines mobilen Endgeräts in einem drahtlosen Telekommunikationssystem, das eine Mehrzahl von Kommunikationszellen definiert, in welchem eine nichteindeutige Zellenkennung und eine eindeutige Zellenkennung übertragen werden, wobei das Verfahren Folgendes umfasst:
Kommunizieren mit einer Funkbasisstation, die eine erste Kommunikationszelle versorgt;
Empfangen (113) einer Anforderung von der Funkbasisstation zum Abrufen der eindeutigen Zellenkennung einer zweiten Kommunikationszelle unter der Mehrzahl von Kommunikationszellen;
Abrufen (115) der eindeutigen Zellenkennung der zweiten Kommunikationszelle; und
Melden (117) der eindeutigen Zellenkennung der zweiten Kommunikationszelle an die Funkbasisstation der ersten Kommunikationszelle.

2. Verfahren nach Anspruch 1, wobei dem Schritt des Empfangens einer Anforderung die Schritte des Bestimmens (101) der nichteindeutigen Zellenkennung der zweiten Kommunikationszelle und Meldens (103) der nichteindeutigen Zellenkennung der zweiten Kommunikationszelle an die Funkbasisstation, die die erste Kommunikationszelle versorgt, vorangeht.

3. Verfahren nach Anspruch 2, wobei mit der nichteindeutigen Zellenkennung der zweiten Kommunikationszelle wie gemeldet mindestens ein Betriebsparameter der zweiten Kommunikationszelle umfassend einen oder mehrere Parameter einer Signalstärkemessung, einer Signalgütemessung und Taktinformationen verknüpft ist.

4. Verfahren nach Anspruch 1 oder 2, wobei das Abrufen und das Melden der eindeutigen Zellenkennung als Reaktion auf den Empfang der Anforderung von der Funkbasisstation der ersten Kommunikationszelle durchgeführt werden.

5. Verfahren nach einem beliebigen der vorhergehenden Ansprüche, wobei die zweite Kommunikationszelle der ersten Kommunikationszelle benachbart ist.

6. Mobiles Endgerät (4) zur Verwendung in einem drahtlosen Telekommunikationssystem, das eine Mehrzahl von Kommunikationszellen umfasst, in welchem eine nichteindeutige Zellenkennung und eine eindeutige Zellenkennung übertragen werden, wobei das Endgerät eine Steuerung (42) für die Kommunikation mit einer Funkbasisstation umfasst, die eine erste Kommunikationszelle versorgt, wobei die Steuerung als Reaktion auf einen Empfang einer Anweisung von der Funkbasisstation der ersten Kommunikationszelle betreibbar ist zum:
Erkennen (115) eindeutiger Zellenkennungsinformationen für eine zweite Kommunikationszelle; und
Melden (117) der eindeutigen Zellenkennungsinformationen für die zweite Kommunikationszelle an die Funkbasisstation der ersten Kommunikationszelle.

7. Mobiles Endgerät nach Anspruch 6, das betreibbar ist zum Abrufen (101) der nichteindeutigen Zellenkennung der zweiten Kommunikationszelle und zum Melden der nichteindeutigen Zellenkennung der zweiten Kommunikationszelle an die Basisstation, die die erste Kommunikationszelle versorgt.

8. Mobiles Endgerät nach Anspruch 7, das zum Abrufen und Melden der nichteindeutigen Zellenkennung der zweiten Kommunikationszelle und in Verbindung damit zum Erkennen und Melden mindestens eines Betriebsparameters der zweiten Kommunikationszelle umfassend einen oder mehrere Parameter einer Signalstärkemessung, einer Signalgütemessung und Taktinformationen betreibbar ist.

9. Mobiles Endgerät nach einem beliebigen der Ansprüche 6 bis 8, wobei die zweite Kommunikationszelle der ersten Kommunikationszelle benachbart ist.

10. Mobiles Endgerät nach einem beliebigen der Ansprüche 6 bis 9, wobei die Steuerung zum Erkennen eindeutiger Zellenkennungen für eine Mehrzahl weiterer Kommunikationszellen und zum Melden der eindeutigen Zellenkennungen, wie sie erkannt worden sind, an die Funkbasisstation der ersten Kommunikationszelle betreibbar ist.

11. Verfahren zur Selbstkonfiguration von Zellennachbarn in einem drahtlosen Telekommunikationssystem, das eine Mehrzahl von Kommunikationszellen umfasst, in welchem eine nichteindeutige Zellenkennung und eine eindeutige Zellenkennung übertragen werden, wobei das Verfahren Folgendes umfasst:
Kommunizieren mit einem in einer ersten Kommunikationszelle betriebenen mobilen Endgerät;
Anfordern (111) des mobilen Endgeräts zum Abrufen der eindeutigen Zellenkennung einer zweiten Kommunikationszelle;
Empfangen (119) der eindeutigen Zellenkennung der zweiten Kommunikationszelle von dem mobilen Endgerät; und
Herstellen einer Transportverbindung durch Finden in einer Nachschlagetabelle einer Übereinstimmung der eindeutigen Zellenkennung der zweiten Kommunikationszelle mit einer Netzadresse der Funkbasisstation, die die zweite Kommunikationszelle versorgt.

12. Verfahren nach Anspruch 11, wobei dem Schritt des Anforderns der eindeutigen Zellenkennung der folgende Schritt vorangeht:
Empfangen (107) einer nichteindeutigen Zellenkennung der zweiten Kommunikationszelle von dem mobilen Endgerät.

13. Verfahren nach Anspruch 12, wobei mit der nichteindeutigen Zellenkennung, wie sie empfangen worden ist, mindestens ein Betriebsparameter der zweiten Kommunikationszelle, umfassend einen oder mehrere Parameter einer Signalstärkemessung, einer Signalgütemessung und Taktinformationen, verknüpft ist.

14. Verfahren nach einem beliebigen der Ansprüche 11 bis 13, weiterhin umfassend Empfangen eindeutiger Zellenkennungen für eine Mehrzahl weiterer Kommunikationszellen von dem mobilen Endgerät.

15. Verfahren nach einem beliebigen der Ansprüche 11 bis 14, wobei die Netzadresse eine IP-Adresse ist.

16. Verfahren nach einem beliebigen der Ansprüche 11 bis 15, wie es durch eine Funkbasisstation durchgeführt wird.

17. Drahtloses Telekommunikationsnetz, das eine Mehrzahl von Kommunikationszellen definiert, in welchem eine nichteindeutige Zellenkennung und eine eindeutige Zellenkennung übertragen werden, wobei das Netz Netzressourcen umfasst, die betreibbar sind zum:
Kommunizieren mit einem in einer ersten Kommunikationszelle betriebenen mobilen Endgerät;
Stellen einer Anforderung (111) an das mobile Endgerät zum Abrufen der eindeutigen Zellenkennung einer zweiten Kommunikationszelle;
Empfangen (119) einer eindeutigen Zellenkennung der zweiten Kommunikationszelle von dem mobilen Endgerät;
Herstellen einer Transportverbindung durch Finden in einer Nachschlagetabelle einer Übereinstimmung der eindeutigen Zellenkennung der zweiten Kommunikationszelle mit einer Netzadresse der Funkbasisstation, die die zweite Kommunikationszelle versorgt.

18. Netz nach Anspruch 17, wobei die Netzressourcen weiterhin betreibbar sind zum:
Empfangen (107) der nichteindeutigen Zellenkennung der zweiten Kommunikationszelle von dem mobilen Endgerät.

19. Netz nach Anspruch 18, wobei die Netzressourcen weiterhin betreibbar sind zum:
Empfangen (107) der mit mindestens einem Betriebsparameter verknüpften nichteindeutigen Kennung der zweiten Zelle, der einen oder mehrere Parameter eines Verwürfelungscodes, einer Signalstärkemessung, einer Signalgütemessung und Taktinformationen umfasst.

20. Netz nach einem beliebigen der Ansprüche 17 bis 19, wobei die Netzressourcen betreibbar sind zum Empfangen (119) eindeutiger Zellenkennungen für eine Mehrzahl weiterer Kommunikationszellen von dem mobilen Endgerät.

21. Netz nach einem beliebigen der Ansprüche 17 bis 20, wobei die Netzadresse eine IP-Adresse ist.

22. Netz nach einem beliebigen der Ansprüche 17 bis 21, wobei die Netzressourcen durch eine Funkbasisstation (2) bereitgestellt werden.

## Revendications

1. Procédé pour faire fonctionner un terminal mobile dans un système de télécommunication sans fil qui définit une pluralité de cellules de communication dans lesquelles une identité de cellule non unique et une identité de cellule unique sont transmises, le procédé comprenant :
la communication avec une station de base radio qui dessert une première cellule de communication ;
la réception (113) d'une demande en provenance de la station de base radio pour récupérer l'identité de cellule unique d'une deuxième cellule de communication parmi la pluralité de cellules de communication ;
la récupération (115) de l'identité de cellule unique de la deuxième cellule de communication ; et
le rapport (117) de l'identité de cellule unique de la deuxième cellule de communication à la station de base radio de la première cellule de communication.

2. Procédé selon la revendication 1, dans lequel l'étape de réception d'une demande est précédée par les étapes de détermination (101) de l'identité de cellule non unique de la deuxième cellule de communication et de rapport (103) de l'identité de cellule non unique de la deuxième cellule de communication à la station de base radio qui dessert la première cellule de communication.

3. Procédé selon la revendication 2, dans lequel l'identité de cellule non unique de la deuxième cellule de communication telle qu'elle est rapportée comporte, lié à elle, au moins un paramètre de fonctionnement de la deuxième cellule de communication comprenant une ou plusieurs parmi une mesure de puissance du signal, une mesure de qualité du signal et des informations de synchronisation.

4. Procédé selon la revendication 1 ou 2, dans lequel la récupération et le rapport d'identité de cellule unique sont effectués en réponse à la réception de la demande provenant de la station de base radio de la première cellule de communication.

5. Procédé selon l'une quelconque des revendications précédentes, dans lequel la deuxième cellule de communication est voisine de la première cellule de communication.

6. Terminal mobile (4) pour utilisation dans un système de télécommunication sans fil qui comprend une pluralité de cellules de communication dans lesquelles une identité de cellule non unique et une identité de cellule unique sont transmises, le terminal comprenant un contrôleur (42) pour communiquer avec une station de base radio qui dessert une première cellule de communication, dans lequel le contrôleur, en réponse à une réception d'une instruction en provenance de la station de base radio de la première cellule de communication, peut fonctionner pour :
détecter (115) des informations d'identité de cellule unique pour une deuxième cellule de communication ; et
rapporter (117) les informations d'identité de cellule unique pour la deuxième cellule de communication à la station de base radio de la première cellule de communication.

7. Terminal mobile selon la revendication 6, qui est utilisable pour récupérer (101) l'identité de cellule non unique de la deuxième cellule de communication et rapporter l'identité de cellule non unique de la deuxième cellule de communication à la station de base qui dessert la première cellule de communication.

8. Terminal mobile selon la revendication 7, et qui peut fonctionner pour récupérer et rapporter l'identité de cellule non unique de la deuxième cellule de communication en liaison avec le fait de pouvoir fonctionner pour détecter et rapporter au moins un paramètre de fonctionnement de la deuxième cellule de communication comprenant une ou plusieurs parmi une mesure de puissance du signal, une mesure de qualité du signal et des informations de synchronisation.

9. Terminal mobile selon l'une quelconque des revendications 6 à 8, dans lequel la deuxième cellule de communication est voisine de la première cellule de communication.

10. Terminal mobile selon l'une quelconque des revendications 6 à 9, dans lequel le contrôleur peut fonctionner pour détecter des identités de cellule uniques pour une pluralité d'autres cellules de communication, et pour rapporter les identités de cellule uniques tels que détectées à la station de base radio de la première cellule de communication.

11. Procédé pour l'auto-configuration de cellules voisines dans un système de télécommunication sans fil qui comprend une pluralité de cellules de communication dans lesquelles une identité de cellule non unique et une identité de cellule unique sont transmises, le procédé comprenant :
la communication avec un terminal mobile fonctionnant dans une première cellule de communication ;
la demande (111) au terminal mobile de récupérer l'identité de cellule unique d'une deuxième cellule de communication ;
la réception (119) de l'identité de cellule unique de la deuxième cellule de communication en provenance du terminal mobile ; et
l'établissement d'une connexion de transport en trouvant dans une table de correspondance une mise en correspondance de l'identité de cellule unique de la deuxième cellule de communication avec une adresse de réseau de la station de base radio qui dessert la deuxième cellule de communication.

12. Procédé selon la revendication 11, dans lequel l'étape de demande de l'identité de cellule unique est précédée par les étapes suivantes :
la réception (107) en provenance du terminal mobile d'une identité de cellule non unique de la deuxième cellule de communication.

13. Procédé selon la revendication 12, dans lequel l'identité de cellule non unique telle que reçue comporte, lié à elle, au moins un paramètre de fonctionnement de la deuxième cellule de communication comprenant une ou plusieurs parmi une mesure de puissance du signal, une mesure de qualité du signal et des informations de synchronisation.

14. Procédé selon l'une quelconque des revendications 11 à 13, comprenant en outre la réception d'identités de cellule uniques pour une pluralité d'autres cellules de communication en provenance du terminal mobile.

15. Procédé selon l'une quelconque des revendications 11 à 14, dans lequel ladite adresse de réseau est une adresse IP.

16. Procédé selon l'une quelconque des revendications 11 à 15 tel qu'exécuté par une station de base radio.

17. Réseau de télécommunication sans fil qui définit une pluralité de cellules de communication dans lesquelles une identité de cellule non unique et une identité de cellule unique sont transmises, le réseau comprenant des ressources de réseau pouvant fonctionner pour :
communiquer avec un terminal mobile fonctionnant dans une première cellule de communication ;
demander (111) au terminal mobile de récupérer l'identité de cellule unique d'une deuxième cellule de communication ;
recevoir (119) en provenance du terminal mobile une identité de cellule unique de la deuxième cellule de communication ;
établir une connexion de transport en trouvant dans une table de correspondance une mise en correspondance de l'identité de cellule unique de la deuxième cellule de communication avec une adresse de réseau de la station de base radio qui dessert la deuxième cellule de communication.

18. Réseau selon la revendication 17, dans lequel lesdites ressources de réseau peuvent fonctionner en outre pour :
recevoir (107) en provenance du terminal mobile l'identité de cellule non unique de la deuxième cellule de communication.

19. Réseau selon la revendication 18, dans lequel lesdites ressources de réseau peuvent fonctionner en outre pour :
recevoir (107) ladite identité non unique liée à au moins un paramètre de fonctionnement de la deuxième cellule qui comprend un ou plusieurs parmi un code de brouillage, une mesure de puissance du signal, une mesure de qualité du signal et des informations de synchronisation.

20. Réseau selon l'une quelconque des revendications 17 à 19, dans lequel lesdites ressources de réseau peuvent fonctionner pour recevoir (119) des identités de cellule uniques pour une pluralité d'autres cellules de communication en provenance du terminal mobile.

21. Réseau selon l'une quelconque des revendications 17 à 20, dans lequel ladite adresse de réseau est une adresse IP.

22. Réseau selon l'une quelconque des revendications 17 à 21, dans lequel les ressources de réseau sont fournies par une station de base radio (2).
